# EUROPEAN PATENT SPECIFICATION

(11) **EP 1 081 612 B1**
(45) Date of publication and mention of the grant of the patent: **12.06.2002**
(21) Application number: 99116993.9
(22) Date of filing: 28.08.1999
(51) Int. Cl.: G06F 17/30

(54) **Providing state information in a stateless data communication protocol**
Zustandsdatenbereitstellung in einem zustandslosen Kommunikationsprotokoll
Apport d'information d'état dans un protocole de communication de données

(43) Date of publication of application: 07.03.2001
(73) Proprietor: Sevenval AG, 50667 Köln (DE)
(72) Inventor: Sponagl, Paul, 51065 Köln (DE); Walkowiak, Olaf, 45145 Essen (DE)
(74) Representative: Dendorfer, Claus, Dr.

(56) References cited:
- US-A- 5 774 670

## Description

The present invention concerns the field of data transmission via stateless data communication protocols. The data may, for example, include hypertext documents, and the data communication protocol may be a protocol used in the World Wide Web (WWW). Use of the invention is intended for all applications in which the provision of state information is desired in the context of stateless data communication protocols. For example, possible applications of the present invention are in the fields of electronic commerce or online databases or online dictionaries or online games.

EP 0 812 088 A2 discloses a method for preserving state in a stateless network protocol. In this method, all documents sent to a client are modified by embedding the state information in the hyperlinks of the documents. In each modified hyperlink, the state information is encoded as a CGI call in the file path specification of the hyperlink. This method requires an elaborate converter program for modifying the documents requested by the client. The converter program must parse these documents and modify the hyperlinks contained therein. This process requires a high amount of computing power. Furthermore, it is difficult to adapt the converter program to new document markup languages or complex document structures.

Another method wherein the state information is embedded into the file path specification of all qualifying hyperlinks is described in European patent application no. 98 120 671.7 filed by the present inventors on 05 November 1998. The entire contents of this earlier application are hereby incorporated by reference. This method also requires that the server is customized in a rather complex way.

Further methods for embedding the state information in hyperlink file path fields are known. These methods use database functions on the side of the server to individually create each document delivered to a user according to predetermined rules. Defining these rules and programming the database are very complex tasks that require the expensive work of specialist programmers.

US 5 774 670 shows the use of so-called "cookies" for storing state information in the user's computer under control of the server. This method, however, is not very popular because of the alleged or real risk that data stored in the user's computer is accessed or modified without authorization. For this reason many users choose to configure their browser in a way that no cookies will be accepted.

The objective of the present invention therefore is to avoid the above-mentioned problems and to create a way of providing state information in a stateless data communication protocol with very little effort. In particular, it is desired to keep the necessary programming work at a minimum while allowing maximum flexibility. The invention should preferably be usable with a wide variety of data communication protocols, server programs, and document markup languages, and use of the invention should keep the server load low when processing user requests.

According to the invention, this objective is solved by the method, the computer program product and the apparatus defined in the independent claims. The dependent claims concern preferred embodiments of the invention.

The invention is based on the fundamental idea to encode the state information not in a file path specification of a hyperlink, but in the site name. This is a radical departure from prior art approaches and practice. Up to now, site names have been considered as a rare commodity, such that the seemingly very wasteful idea of encoding state information in site names has not been considered. The present invention overcomes this prejudice by teaching several ways for efficient data communication where state information is encoded in site names, wherein each of a cluster of site names designates the same server site.

In other words, the present invention teaches to make a single server site accessible by a variety ("cluster") of site names, wherein each possible state information corresponds to at least one site name in the cluster. The state information is provided to the server site each time the server site is accessed using the full site name, and the state information is preserved between subsequent access actions as long as the full site name is used by the client. The client further extracts the state information from the received site name for immediate or possible later use. In the example of WWW servers and browsers, the site name may be an internet host name comprising an internet domain and further information. Since the normally used internet browsers store the full site name, the state information is provided to the server each time an internet page at the server site is accessed.

Thus the present invention offers a very convenient and flexible way of providing state information. The programming work needed to implement the present invention is extremely small. A few lines of code are sufficient to configure the communication network and to modify well-known server programs for performing the method of the invention. The client program and the accessed documents do not have to be modified at all.

In the terminology used herein, a "site" is a location at which a plurality of documents or files or other data may potentially be accessed. This means that the path name of a single document is not considered to refer to a site. An example of a site is an internet host name, i.e., a hierarchically structured domain. Even if no documents are actually present, the possibility exists to store and access a plurality of documents at the server site addressed by the host name, said documents being distinguished by their respective file or path names.

A "stateless protocol" is in particular a data transmission protocol that does not have the notion of "connections" and therefore does not provide direct information about the beginning, the continuation or the end of a user session. In preferred embodiments of the invention, an internet protocol like, for example, the HTTP protocol (hypertext transfer protocol) is used. The HTTP protocol is defined in the proposed standard document RFC 2616 by R. Fielding et al. This document is available at the internet address www.w3c.org, and its contents are hereby incorporated in their entirety.

If the present invention is used in the context of internet communication wherein a plurality of information pages is accessed by the user while maintaining the state information, individual users and/or user sessions may be distinguished and identified. This is helpful even if the accessed documents are not modified in response to the state information because it allows tracking of the path the user chooses when browsing through the available documents (so-called "session tracking").

In preferred embodiments of the present invention, however, the state information influences the response of the server in some way. This influence may be, for example, that the server outputs different pages in response to the state information (e.g., an order confirmation page if address data is available for the user identified by the state, and an address entry form otherwise), or that information in a page is modified in accordance with the state information (e.g., the total price of all goods in a shopping basket is shown). In such embodiments, some programming may of course be necessary to implement the desired dependency of the information provided by the server from the state information.

Even if the transmitted documents are modified to some extent depending on the state information, the computing load put on the server for providing a document is usually very low. This is in complete contrast to the method known from EP 0 812 088 A2 where each delivered document must be parsed and analyzed in order to find and modify all hyperlinks.

The present invention may be used in connection with the transmission of all kinds of data, but applications are preferred in which documents and in particular hypertext documents are concerned. Such hypertext documents may be written in any kind of markup language like SGML (standard generalized markup language) or HTML (hypertext markup language) or XML (extensible markup language). Furthermore, the documents may be generated by any mechanism including script processing of PHP (see www.php.net) or ASP (active server page) code. The state-preserving hyperlinks in the documents must of course be written in a way that the encoded state information is not destroyed. For example, hyperlinks pointing to the same server site will not include a host name, but just a (absolute or relative) file path specification (unless the state shall be deleted when the hyperlink is followed).

Again, the present invention has substantial advantages over the method known from EP 0 812 088 A2 since the transmitted documents do not have to be analyzed and modified for enabling the state preservation feature. Therefore, no special provisions are normally required for using other markup or scripting languages or document authoring tools. This is especially important in the internet field because of its rapid development and the multitude of presently available and possible future extensions. The present invention can readily be used with streaming data formats and extensions and plugins like that known under the trademarks Flash and Shockwave available at www.macromedia.com.

In preferred embodiments of the invention, the server site is identified by an address, preferably an internet IP address, and a nameserver is used for translating the site name referring to the server site to the corresponding address. The nameserver is preferably configured in a way that all site names of the site name cluster are mapped to the same address, such that the same server site is accessed irrespective of the encoded state information. When the server site is contacted, the site name containing the encoded state information is preferably transmitted to the server in a header field according to the HTTP protocol. This header field may the host header field or the referrer header field or another suitable header field. The server may then extract and decode the state information from the full site name. This preferred embodiment, of course, requires that the server site is configured such that communication requests carrying any site name from the site name cluster are accepted.

It is one of the merits of the inventors to have shown that the configuration of both the nameserver and the server site in the way described in the previous paragraph are possible with very little programming effort. This is especially true in preferred embodiments in which a hierarchical site name system is used. In this case, it is preferred that all site names in the cluster of site names coincide with respect to the highest hierarchy level and possibly one or more lower hierarchy levels. For example, the top and second level part of an internet host name may be used to identify the server site, while lower level parts are used for holding the state information. It is also possible to use some levels of the hierarchical naming scheme for both purposes at the same time. For example, a single server site may be designated by a few different second level domain names, and the choice of the actual name out of this predetermined set of name portions may confer the whole or parts of the state information. In preferred embodiments, the number of possible states is very high (e.g., more than 100 or more than 10000 or more than 1000000), such that it would not be possible in practice to register a corresponding number of second level domain names with a centralized registration authority.

Generally, the first communication request issued by the client may already contain the state information encoded in the site name. For example, the user may have bookmarked the full site name (including the state information) in an earlier session, or he/she may have received it by e-mail, or he/she might have copied it from a printed advertisement. Means are provided in preferred embodiments of the invention for determining whether or not a valid state information is present in the site name received at the server site. If no valid state information is present (e.g., because the lifetime of the state information has expired or because the state information has an invalid format or because the user typed in a "standard" site name not containing any state information), a new identifying state information is created in some embodiments. A redirection instruction to the site name containing the new state information may then be sent to the client. Additionally or as an alternative, the user may be asked to register, e.g., by filling out some registration form.

The state information may be any kind of information in any encoding. In preferred embodiments of the invention, the state information is an identifier associated with the user or with the current user session. This identifier may be used for accessing a user record contained in a database at the side of the server. Full personal information about the user and/or the current session may be stored in the user record. This kind of identifying status information, which acts as a key to a further database access, is normally invariable during a plurality of request/reply events or even during the whole user session or the whole time the user is registered with a service provider. In some embodiments, however, the state information is modified during a user session in order to reflect, for example, the contents of a shopping basket or a changing score in an online game. Arbitrarily long user sessions are possible, and the state information may be changed as often as desired. Any change of the state information corresponds to a change of the current site name within the site name cluster.

The state information is not restricted to being merely an identifier. Generally, any kind of data in any encoding may be contained in the state information. The encoding may be such that the state information is expressed in a very compact way within the limitations of the character set permissible in site names. However, it is also possible to use an encoding that presents some meaningful information to the user when the site name (containing the encoded state information) is shown in the URL field of common browsers. For example, the user might prefer a human-readable encoding of the state information. In other applications, a human-readable encoding (that may be easy to guess or memorize) should be avoided in order to prevent unauthorized access. It is also possible to use meaningful text (e.g., advertising slogans) to encode the status information. For example, a numerical status code N could be represented by the N-th text phrase contained in a predetermined codebook.

In preferred embodiments, the site name may be an internet host name. This is a hierarchical name structure comprising a top level domain, a second level domain and possibly further, lower level domains. Often the top and the second level domains are just referred to as "domain". An internet host name does not contain any file path part specifying a file name within the sever site identified by the host name. For example, the internet URI http://www.foo.de/prd.html comprises the host name www.foo.de (containing the domain foo.de) and the file path specification (in this case a simple file name) prd.html. The different parts of an internet URI (uniform resource identifier) are described in more detail in the HTTP standard mentioned above.

In other preferred embodiments, the site name may be an internet IP address or IP number according to version 6 of the IP standard containing more than 32 bits. The IP numbering system may also be considered as a hierarchical naming scheme. In other preferred embodiments, however, all site names in the site name cluster are mapped to a single (or at most a few) IP numbers. This is especially preferred if IP numbers according to the present versions of the IP standard are used since the number space for such 32 bit IP numbers is rather limited.

The present invention may also be used in some embodiments for maintaining state information when the user changes from one server site to another server site. In this case, the part of the site name identifying the server site is changed, but the part containing the state information is maintained. For example, a shopping site may contain a link to an internet payment agency, and details of the payment may be encoded in the site name of this link.

The state information may, in some embodiments, comprise validity information like a verification number or some timestamp or some data defining the validity period of the state information. The state information may be considered invalid if the predetermined validity period has expired. If there is no lifespan limitation, the state information may be regarded as a "timeless cookie" that can be used over and over again if the user, for example, bookmarks an URI containing the state information.

The computer program product and the apparatus of the present invention preferably also comprise the features mentioned above and/or in the dependent claims in connection with the inventive method.

Five sample embodiments of the present invention and several further alternative embodiments will now be explained in more detail. Reference is made to the schematic drawings, in which:
Fig. 1 is a representation of two hypertext documents,
Fig. 2 is a block diagram of some of the components involved when accessing a hypertext document,
Fig. 3 is a flow diagram of a prior art method for data transmission using a stateless data communication protocol, and
Fig. 4a and Fig. 4b are message sequence diagrams of a first sample embodiment of the present invention in which state information is provided and preserved.

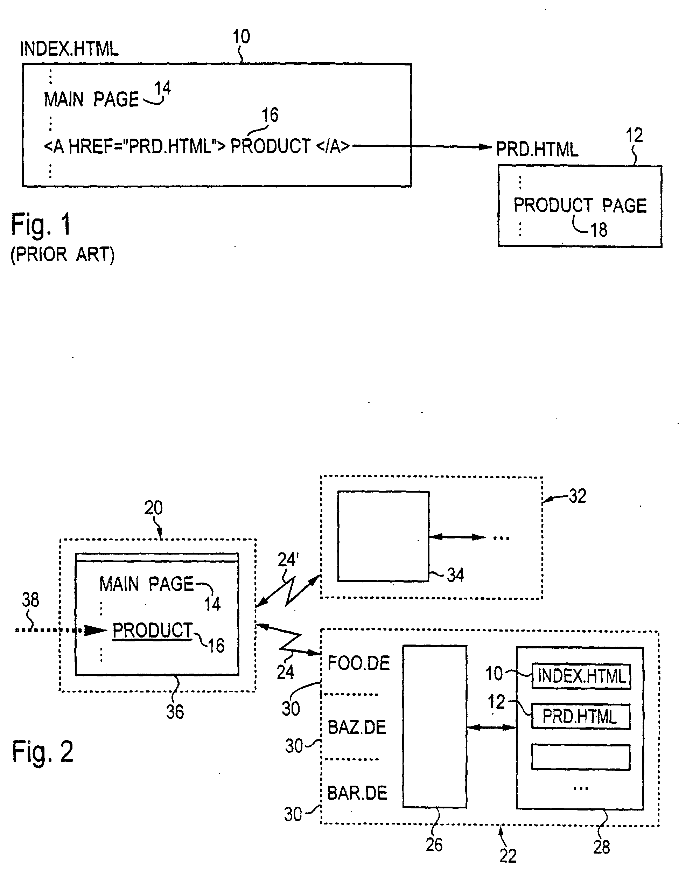

Fig. 1 depicts two hypertext documents 10, 12 having the filenames "index.html" and "prd.html", respectively. Both hypertext documents 10, 12 are written in the page description language HTML, but any other markup language that may or may not comprise hyperlinks may also be used. The first hypertext document 10 ("index.html") comprises contents 14 and a hyperlink 16 pointing to the second hypertext document 12 ("prd.html"), which in turn comprises contents 18. The hyperlink 16 consists of an anchor tag <A ...> ... </A> containing identifying text ("product") and a HREF attribute. The value of the HREF attribute is a file name or a file path specification, i.e. an address not containing a host name. The data structures depicted in Fig. 1 are known per se and are described in detail, e.g., in the book "The HTML Sourcebook" by Ian S. Graham, John Wiley & Sons, New York, 1995.

Fig. 2 shows an arrangement generally used for accessing and viewing hypertext documents. A client 20 is provided by a general purpose computer of a user executing a well-known browser program. For example, the browser program may be one of the internet browsers available under the trademarks "Netscape Navigator" or "Microsoft Internet Explorer", and the user's computer may be a standard personal computer. The client 20 accesses a server 22 via a computer network 24, for example the internet. A stateless communication protocol, in the present sample embodiment the HTTP protocol supported by TCP, is used for data communication. In this protocol, requests sent by the client 20 are answered by replies of the server 22. The protocol is called "stateless" because subsequent requests and replies do not unambiguously refer to each other (the HTTP referrer header may be ambiguous).

The server 22 is a powerful general purpose computer having a hardware and software configuration known per se. For example, the server 22 may use the well-known Apache software available at www.apache.org. At the hardware level, the server 22 comprises a control unit 26 communicating with a data storage unit 28 for storing documents like the hypertext documents 10, 12. At the functional level, the server 22 provides a plurality of server sites 30. Each of the server sites 30 is identified with one top and second level domain like, for example, the domains "foo.de", "baz.de" and "bar.de". Each server site 30 can be considered as a virtual server in itself, having its own unique IP number and providing access to all documents stored at any path location of the corresponding domain. For each server site 30, the control unit 26 analyzes and processes the requests of the browser or client 20, accesses, if necessary, documents in the data storage unit 28, and generates and sends corresponding replies to the client 20.

The client 20 may further access a nameserver 32 via a network 24'. The nameserver 32 is used for mapping host names into the corresponding IP numbers. The nameserver 32 is a complex distributed computer network, and one of the computers contained therein is shown in Fig. 2 with reference numeral 34. In the present sample embodiment, the nameserver 32 implements the internet DNS (dynamic name service) system. The network 24' is also part of the internet and transmits hostname lookup request using the UDP protocol. The operation of the nameserver 32 is well known per se.

Fig. 2 shows, as an example, the client 20 displaying the first hypertext document 10 in a browser window 36. The contents 14 are displayed as formatted text. The identifying text enclosed in the anchor tags of the hyperlink 16 is shown underlined for designating the presence of a hyperlink. If the user performs a mouse click 38 (shown in fig. 2 as a dotted arrow) on the hyperlink 16, the corresponding hypertext document 12 is called and will be displayed in the window 36.

At the level of abstraction of Fig. 2, this drawing represents prior art systems as well as embodiments of the present invention.

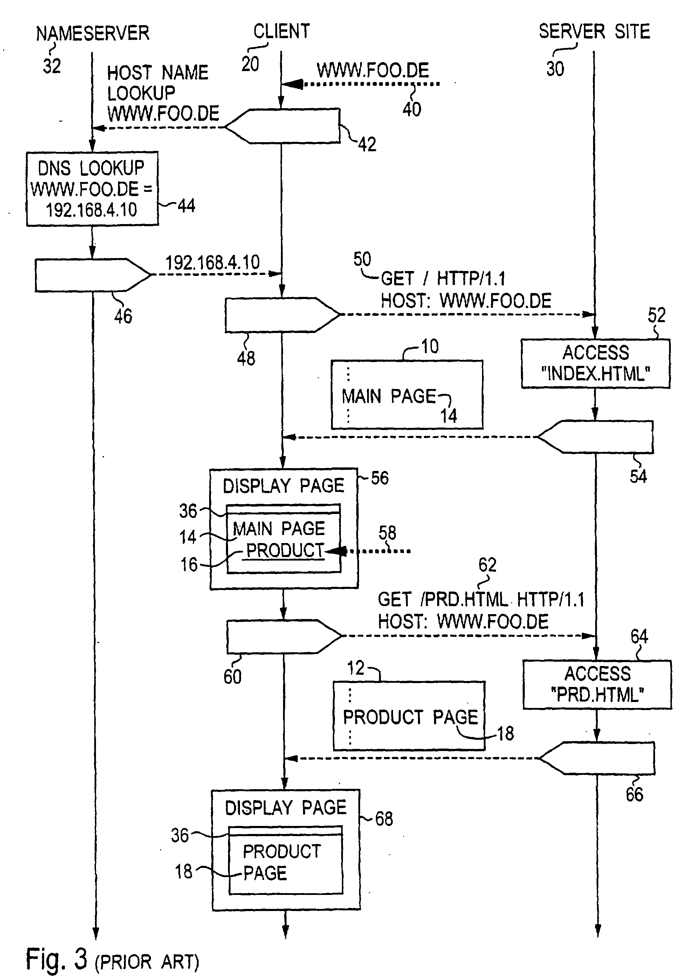

Fig. 3 shows, as an example, a communication sequence according to the prior art between the client 20 and the server site 30. The sequence starts by the user typing the host name "www.foo.de" into an entry field of the browser (user action 40). In response to this user command, the client 20 sends a hostname lookup query to the nameserver 32 in sending action 42. For the sake of simplicity, the preliminary steps of identifying the relevant nameserver 32 have not been shown here. These preliminary steps are well-known per se and are not the subject of the present invention.

In response to receiving the lookup query, the nameserver 32 accesses a zonefile definition in which the host name "www.foo.de" is associated with a particular IP number, in the present example the IP number 192.168.4.10 (step 44). This IP number is sent back to the client 20 (sending action 46). The client 20 then opens a TCP connection to this IP number and sends a first request 50 to the server site 30 (action 48). The first request 50 comprises the request line "get / http/1.1" and a host header field containing the requested host name, i.e. "www.foo.de", as its value. In the request line the method "get" designates the kind of request, and "http/1.1" designates the version of the HTTP communication protocol. The interposed character "/" designates an empty file name (file path specification) meaning that the predetermined main page of the server site 30 is requested.

In response to the first request 50, the server 22 accesses the first hypertext document 10 ("index.html") as the main page of the server site 30 (step 52). This first hypertext document 10 ("index.html") is sent to the client 20 in sending action 54, and its contents 14 are displayed by the browser running on the client 20 in the browser window 36 (step 56). This has already been illustrated in Fig. 2.

If the user now performs a mouse click 58 onto the underlined hyperlink 16, a second request 62 is sent to the server site 30 in sending step 60. This second request 62 is similar to the first request 50, but it comprises the file name "prd.html" in the absolute file path specification "/prd.html". This file name has been obtained by the browser from the argument of the HREF attribute of the hyperlink 16. The server 22 receives the second request 62 directed to the IP number of the server site 30 and in response accesses the second hypertext document 12 ("prd.html") in step 64. This document 12 is sent to the client 20 in step 66, and the contents 18 of document 12 are displayed in the browser window 36 in step 68.

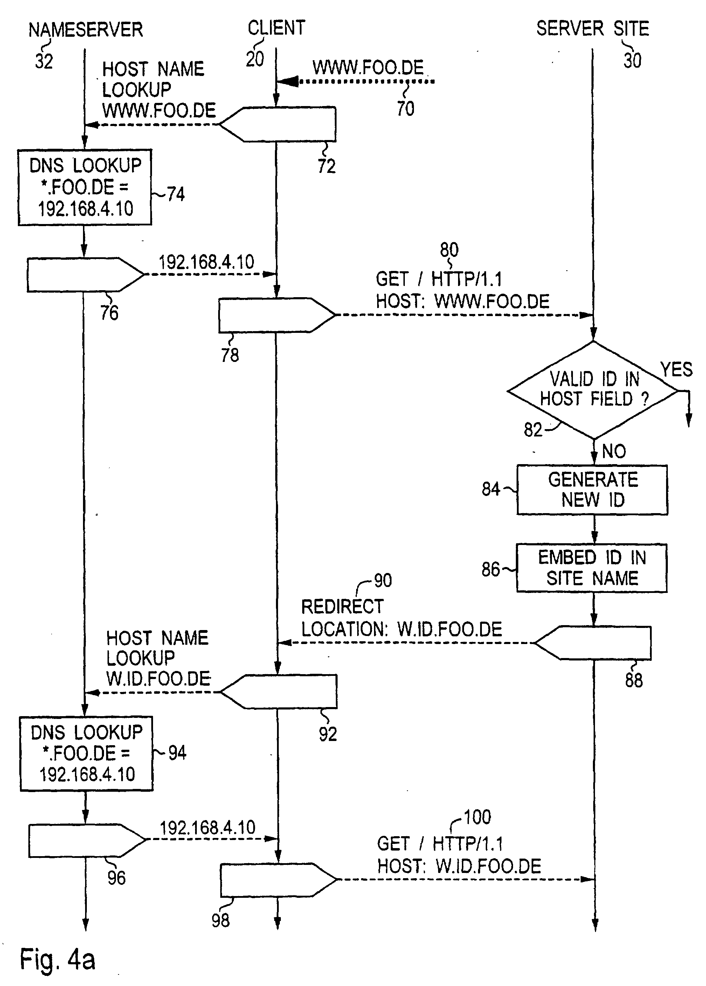

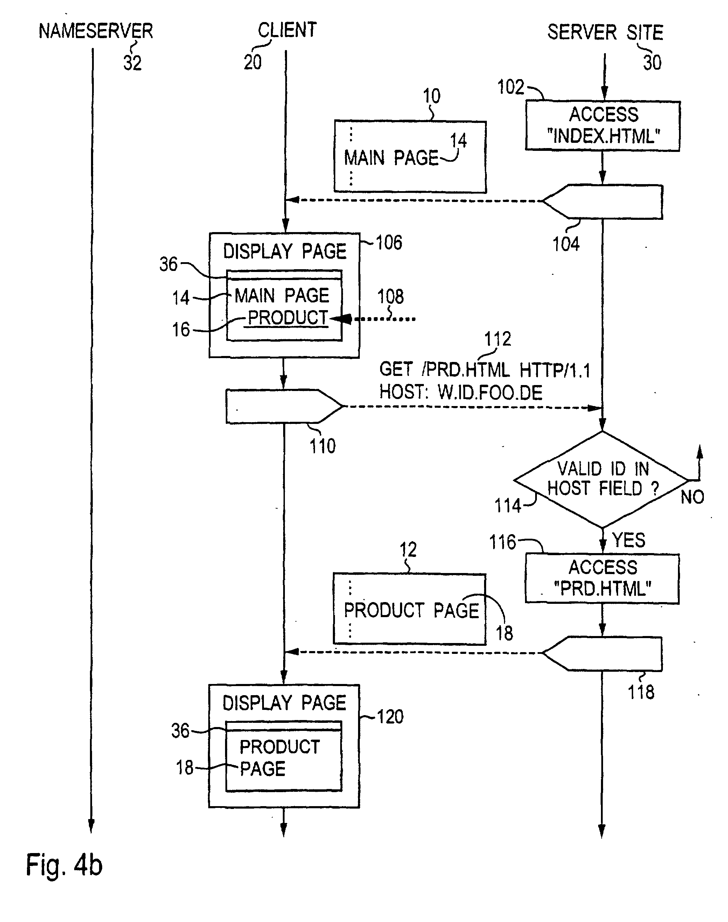

The message sequence diagrams of Fig. 4a and Fig. 4b represent essentially the same sample run as shown in Fig. 3. However, in this case state information is generated, transmitted and preserved between subsequent request/reply pairs. This feature offers substantial advantages, e.g. in the field of electronic commerce.

The sample run shown in Fig. 4a again starts with a user action 70 in which the user wishes to access the server site named "www.foo.de". A hostname lookup is performed in steps 72 and 74. These steps correspond to steps 42 and 44 of Fig. 3 with the exception that the DNS zonefile of the nameserver 32 contains an entry specifying that all host names having a top level domain "de" and a second level domain "foo" are to be mapped to the IP number 192.168.4.10 irrespectively of the third and any lower level domains given in the host name. The nameserver 32 consequently outputs the IP number 192.168.4.10, which is sent to the client 20 in sending step 76. The browser running on the client 20 generates a first request 80, which is exactly the same as the request 50 shown in Fig. 2, and sends the request 80 to the server site 30 in sending step 72.

Upon receipt of the request 80 at the server site 30, it is first checked in test 82 whether or not the host name supplied as the value of the HTTP host header field contains a valid state information. In the present sample embodiment, the state information would have a predetermined format and would be contained in the third level domain part of the hostname. This third level domain part of the first request 80 is "www", which is not considered to be a valid encoded state information. Therefore the "no" branch of test 82 is chosen, and a new state information (called "id" in the present sample embodiment) is generated in step 84. The state information "id" in the present sample embodiment is a unique alphanumerical identifier.

In the subsequent step 86, the generated state information "id" is embedded in a new site name. Since, in the present sample embodiment, the site name cluster identifying the server site 30 comprises all host names having the top level domain "de", the second level domain "foo" and arbitrary lower level domains, a wide variety of encodings is possible. The sample encoding shown in the present embodiment is a simple textual concatenation using "w" as the fourth level domain part and the state information "id" as the third level domain part. The new host name containing the state information "id" therefore reads "w.id.foo.de".

As the next step 88, a redirection command 90 is sent to the client 20 in the status line of the HTTP reply (status code 3xx). The redirection target is the new host name "w.id.foo.de" containing the state information. Receiving the redirection command 90 causes the client 20 to disregard any further contents of the reply and to direct any further requests to the server site identified by the new host name. The new host name is also displayed in the browser's URL entry field. All in all, the effect of receiving the redirect command 90 is essentially the same as if the user had typed in the new host name "w.id.foo.de" into the browser's URL entry field.

The client 20 will now perform a new host name lookup procedure using the new host name "w.id.foo.de". This host name is sent to the nameserver 32 in sending action 92. As mentioned above, the nameserver 32 is configured in a way to disregard any further host name parts if only the top and second level domains "foo.de" are present. Therefore the DNS lookup step 94 will yield the IP number 192.168.4.10 also for the new host name "w.id.foo.de". This IP number is transferred to the client 20 in step 96.

The client 20 next generates a second request 100 containing the new host name "w.id.foo.de" in the HTTP host header field. This request 100 is sent via the TCP protocol to the IP number 192.168.4.10. The server site 30 is configured in a way corresponding to the zonefile configuration of the nameserver 32. More in detail, the server site 30 will accept all requests directed to the server site's IP number if only the top and second level domain fields of the host name are "foo.de". Lower level domain fields are disregarded. It is a standard feature in many internet server programs like the Apache program mentioned above that an evaluation and test of the host name supplied in the HTTP host header field is possible. The original intention behind this feature was that several distinct server sites could possibly be accessed using a single IP number because of the present shortage of IP numbers. It is an inventive merit of the present inventors to have found a novel way of using this feature for implementing the present invention.

The further steps in the present sample run are shown in Fig. 4b. Similar to the corresponding steps in the prior art method, the first hypertext document 10 is accessed at the server site 30 (step 102) and sent to the client 20 (step 104). The contents 14 of this document are displayed in the browser window 36 in step 106.

When the user follows the hyperlink 16 by means of a mouse click 108, a corresponding HTTP request 112 will be generated and sent to the server site 30 in step 110. This request 112 contains the new host name generated in steps 84, 86 since this name has been preserved by the browser running on the client 20. It is important to note that the HREF attribute of the hyperlink 16 only contains a file path specification and no host name part. The present host name is therefore maintained. The requirement that hyperlinks must not set new host names if the state information shall be preserved is the only restriction imposed by the present sample embodiment on the structure and contents of the hypertext documents. It should further be noted that no processing of the first hypertext document 10 has been necessary for preserving the state information. Thus the present embodiment needs much less computing power of the server 22 than prior art methods. Of course, in alternative embodiments the state information could be used to appropriately modify the first hypertext document 10.

Upon receipt of the HTTP request 112, a check is made by the server site 30 whether or not valid state information is encoded in the host name supplied in the HTTP host header field (test 114). This is assumed in the present situation, and the "yes" branch of test 114 is followed. The further steps of accessing the second hypertext document 12 (step 116), sending it to the client 20 (step 118) and displaying its contents 18 (step 120) are identical to steps 64, 66 and 68 shown in Fig. 3. Again, it should be noted that no real time processing of the second hypertext document 12 is necessary for maintaining the state information, although such processing may be performed for other reasons.

The request/response mechanism shown in Fig. 4b can be continued as often as desired while preserving the encoded state information. It is remarked that the "yes" branch of test 82 in Fig. 4a would roughly correspond to a jump to step 102, and the "no" branch of test 114 in Fig. 4b would roughly correspond to a jump back to step 84. This completes the description of the first sample embodiment.

A second, third, fourth and fifth sample embodiment of the present invention will now be described showing the actual programming code used in possible implementations. For all five sample embodiments described herein, a suitable DNS zonefile record is required that maps all site names contained in the site name cluster into a single IP number. Such a zonefile record for the sample top and second level domain "foo.de" is shown in the following. The bracketed numbers at the left hand side are just line numbers used for easy reference and are not part of the actual files:

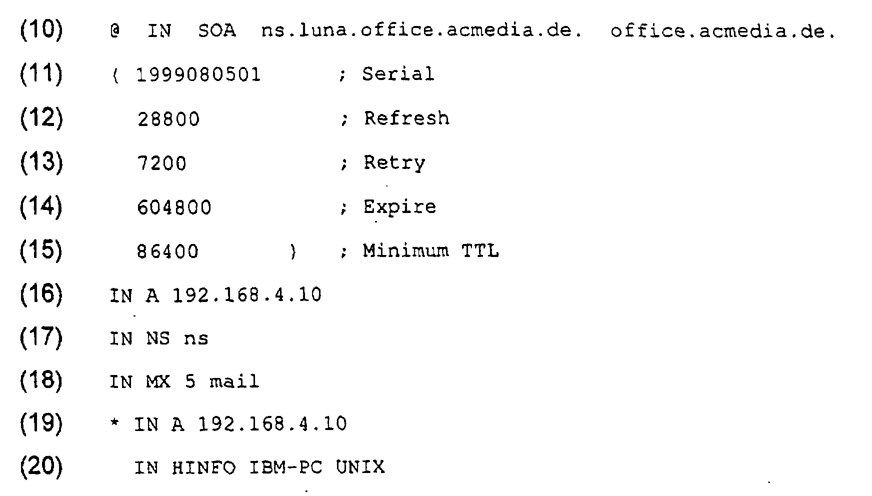

In this zonefile record, line 10 is the standard header and lines 11-15 contain standard timing information. Line 16 is the so-called A record for the domain foo.de, line 17 contains nameserver information, and line 18 contains mail exchange information. The definition in line 19 is the decisive one with respect to the present invention. This definition configures the nameserver 32 such that every host name lookup query for any hostname XXXX.foo.de (where XXXX is an arbitrary character sequence) will be answered by the IP number 192.168.4.10.

The following portions of code concern the second sample embodiment of the invention. This embodiment uses version 1.3.6 or higher of an Apache server program containing the optional modules mod_php and mod_unique. First the Apache webserver is configured to provide a virtual host (corresponding to the server site 30) for the IP number 192.168.4.10 (lines 30-33 and 39). Line 33 defines that this virtual host answers HTTP requests directed to any site name ending in "foo.de" on the HTTP host header field. In other words, this configuration corresponds to that of the nameserver 32 in that the information contained in the third and lower level domain fields of the supplied host name is disregarded. Line 35 specifies that any transmitted document will be processed by a PHP interpreter program. This is important since the functionality of PHP will be used for implementing the invention in the present embodiment. Lines 34 and 36-38 contain administrative information less relevant for understanding the present invention:

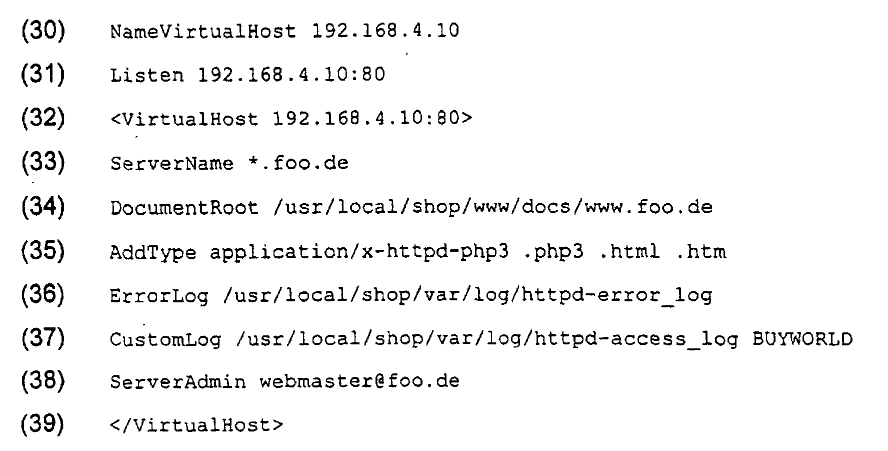

The PHP interpreter program is configured such that a PHP script contained in the file "prepend.inc" will be added before any file that is delivered by the server. This functionality is achieved by the following line 40 in the PHP configuration file "php-ini":

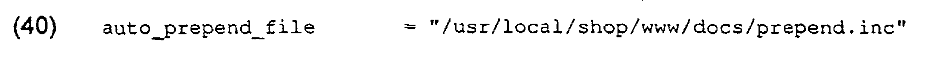

The file "prepend.inc" mentioned above contains the following PHP script:

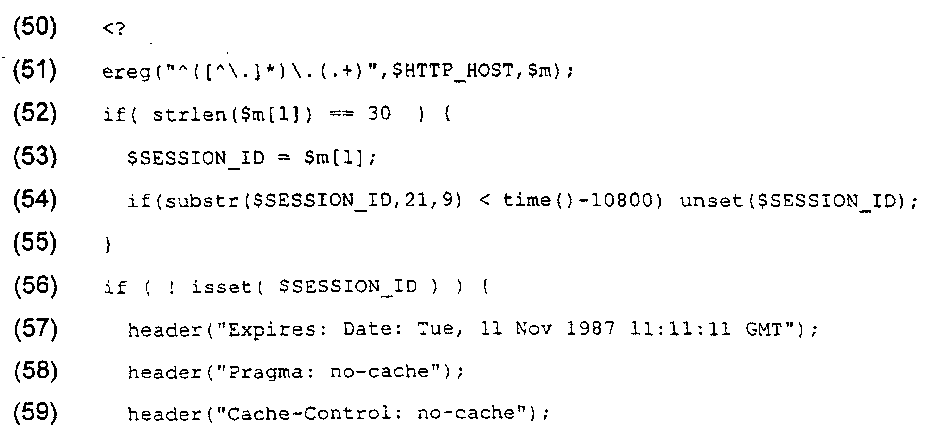

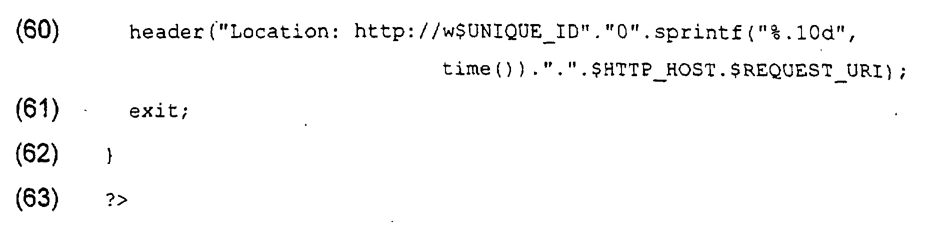

In this PHP script, line 51 extracts the encoded state information from the host name supplied in the HTTP host name field (which is available via the variable $HTTP_HOST). The validity of the state information is checked in lines 52-55 (corresponding to tests 82 and 114 in Fig. 4a and Fig. 4b). In particular, a test as to the format of the state information is made in line 52. Only if the encoded state information comprises exactly 30 characters, a timestamp is extracted in line 54 and a check is made whether or not the lifetime of the state information (10800 seconds in the present example) has expired. Line 54 can be omitted in alternative embodiments in order to obtain an unlimited validity period of the state information.

If no valid state information has been found (line 56), a new host name containing a newly generated unique identifier is sent back to the client 20 in a redirect command (line 60). Referring to Fig. 4a, line 56 corresponds to test 82 ("no" branch), and line 60 corresponds to steps 84 and 86. Lines 57-59 contain additional HTTP header values for preventing an undesired caching on the side of the internet browser. In the case of a redirection, processing of the client's request ends in line 61.

If valid state information has been found, lines 57-61 are skipped and the requested document is sent to the client 20. This corresponds to test 114 ("yes" branch) and steps 116 and 118 in Fig. 4b.

The third sample embodiment will now be described. This embodiment is similar to the second sample embodiment described above in that it also uses the scripts shown in lines 10-20, 30-39 and 40 and the PHP processing feature. However, the file "prepend.inc" contains the following lines 70-82:

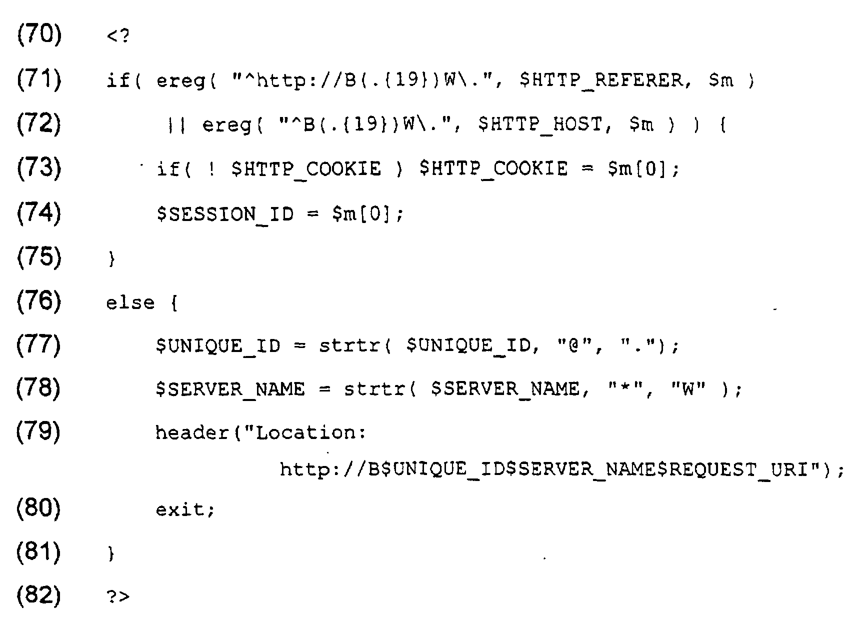

The code in lines 71-72 tests for the presence of encoded state information (having a length of 19 characters) in either the HTTP host header (variable $HTTP_HOST) or the HTTP referrer header (variable $HTTP_REFERER). If such state information is found, it is extracted in lines 71-72 and stored in the variables $HTTP_COOKIE (only if the HTTP cookie header has been empty; see line 73) and $SESSION_ID (line 74). Processing then continues by accessing and sending the requested file to the client 20 (corresponding to steps 116, 118 in Fig. 4b). The extracted state information can be used to modify the file in any desired way using, e.g., the PHP processing possibilities.

Lines 77-80 are executed if no encoded state information has been detected. In this case, a uniquely identifying string having 19 characters is obtained (line 77). This string is further encoded in line 77 by mapping "@" characters to "." characters because the former are not permitted in host names according to the RFC 1035 and RFC 2616 standards. A similar encoding of the server name is made in line 78. Line 79 contains the redirection command to the newly created site name. Processing of the request ends in line 80. All in all, these steps correspond to steps 84-88 shown in Fig. 4a.

The fourth sample embodiment of the invention will now be described. This embodiment is a very general possibility of implementing the present invention in the context of all kinds of page description languages like ASP, SHTML and so on. It is assumed in this embodiment that an internet shop using cookies shall be converted to the method of the present invention. An Apache server program having the optional module "mod_rewrite" is used.

For implementing this fourth sample embodiment, a zonefile record is used as defined in lines 10-20 above. Furthermore the virtual host definition of the Apache program is assumed to contain lines 30-34 and 36-39 given above. The following lines 90-96 are inserted into the virtual host definition at an appropriate place:

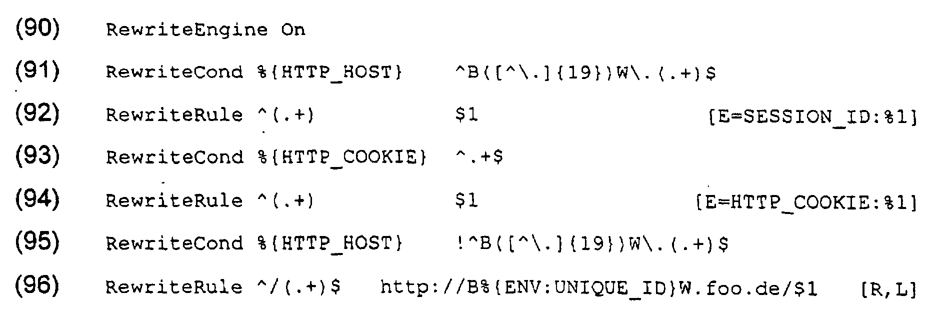

In the first rewrite rule defined in lines 91 and 92, the host name contained in the HTTP host header file is analyzed and any state information contained therein is stored in the variable SESSION_ID. The second rewrite rule (lines 93 and 94) removes and stores any cookie information for further reference. The third and last rewrite rule (lines 95 and 96) concerns the case that no valid state information is found in the host name. Then a redirection command to a newly generated site name is issued. The letter "R" at the end of line 96 indicates the redirection command, and the letter "L" indicates that there are no further rewrite rules. This completes the description of the fourth sample embodiment.

The fifth sample embodiment of the invention is similar to the fourth one. It also uses rewrite rules and allows a very general application of the present invention in connection with a wide variety of page description languages. The difference to the fourth sample embodiment is that lines 91-96 shown above are replaced by the following lines 100-129. In the listing, lines 110-125 are identical to line 109 and have therefore been omitted for the sake of brevity;

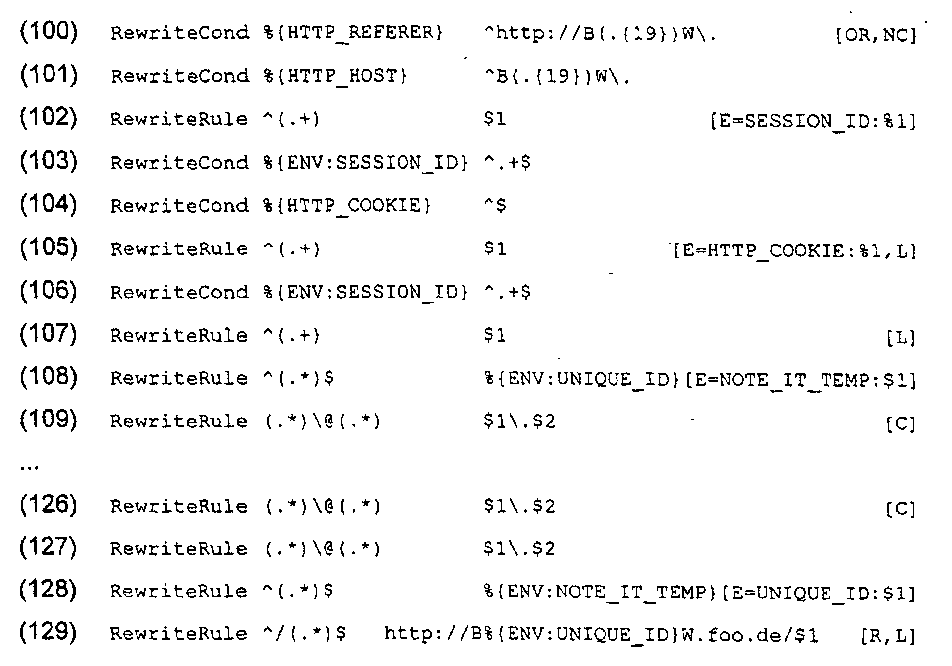

The mode of operation of the fifth sample embodiment corresponds to that of the third sample embodiment shown above, but rewrite rules have been used instead of PHP commands. Encoded state information stored in either the HTTP referrer or the HTTP host header field is found and extracted into the $SESSION_ID variable in lines 100-101. If such information has been found, it is stored in the $HTTP_COOKIE variable (if $HTTP_COOKIE is empty; lines 103-105), and program execution ends (directive "L" in lines 105 and 107).

If no valid state information has been found, a new unique identifier is generated (line 108) and encoded to bring it into conformity with RFC 1035 name space requirements (lines 109-128). Line 129 is identical to line 96 described above and causes redirection to the newly generated host name. This concludes the description of the fifth sample embodiment.

While five distinct sample embodiments of the present invention have been explained above, it is apparent for the expert that a multitude of combinations of the features described in these sample embodiments and in the introductory part of this specification are possible.

## Claims

1. A method for providing state information in a stateless data communication protocol, said state information being provided between a client (20) and a server site (30), said server site (30) being accessible at each of a cluster of site names, said method comprising the step of using one site name of said cluster of site names for accessing said server site (30), said site name containing the encoded state information.

2. The method of claim 1, wherein said server site (30) is identified by an address, preferably an internet IP address, said method comprising the further steps of:
- providing a nameserver (32), preferably an internet DNS nameserver, with said site name containing said encoded state information,
- receiving said address of said server site (30) from said nameserver (32), and
- contacting said server site (30) at said address and supplying said site name containing said encoded state information to said server site (30), said site name preferably being supplied to said server site (30) in an HTTP header field.

3. The method of claim 1 or claim 2, further comprising the initial steps of:
- contacting said server site (30) using a site name of said cluster of site names, said site name not containing a valid encoded state information,
- receiving a redirection instruction to another site name of said cluster of site names, said other site name containing an encoded state information supplied by said server site (30), and
- using said other site name for accessing said server site (30).

4. A method for providing state information in a stateless data communication protocol, said state information being provided between a client (20) and a server site (30), said server site (30) being accessible at each of a cluster of site names, said method comprising the steps of:
- receiving one site name of said cluster of site names, said site name containing the encoded state information, said site name preferably being received in an internet host header field, and
- extracting said state information from said site name.

5. The method of claim 4, further comprising the step of using said extracted state information for providing information depending on said state information to said client (20), and preferably further comprising the steps of modifying said state information and embedding at least one site name containing the encoded modified state information into said information provided to said client (20).

6. The method of one of claims 1 to 5, wherein said state information is preserved throughout a plurality of communication events between said client (20) and said server site (30).

7. The method of one of claims 1 to 6, wherein said stateless data communication protocol is an internet protocol, in particular the HTTP protocol.

8. The method of one of claims 1 to 7, wherein said state information is an identifier associated with a user or with a current user session.

9. The method of one of claims 1 to 8, wherein said data communication protocol uses a hierarchical site name system, and wherein the portions of all site names in said cluster of site names starting from the top hierarchy level down to a predetermined hierarchy level either are identical or are contained in a predetermined set of site name portions.

10. The method of one of claims 1 to 9, wherein said site name is an internet host name, and/or wherein said site name is an internet IP number containing more than 32 bits, and/or wherein said site names are distinct from file path specifications defining documents within said server site (30).

11. The method of one of claims 1 to 10, wherein at least one further server site (30) is provided, said further server site (30) being accessible at each of a further cluster of site names, said method comprising the step of using one site name of said further cluster of site names for accessing said further server site (30), said site name containing the encoded previous state information.

12. The method of one of claims 1 to 11, wherein said state information comprises information for identifying the user and/or commercial information related to the user and/or information regarding the validity of said state information.

13. A computer program product for execution by a general purpose computer for providing state information in a stateless data communication protocol, said computer program product including instructions for making said general purpose computer perform the steps of the method of one of claims 1 to 12.

14. An apparatus comprising at least one general purpose computer programmed for performing the steps of the method of one of claims 1 to 12.

## Patentansprüche

1. Verfahren zum Bereitstellen von Zustandsinformationen in einem zustandslosen Datenübertragungsprotokoll, wobei die Zustandsinformationen zwischen einem Klient (20) und einem Serverbereich (30) bereitgestellt werden, wobei auf den Serverbereich (30) unter jedem Bereichsnamen einer Ansammlung von Bereichsnamen zugegriffen werden kann, wobei das Verfahren den Schritt aufweist, einen Bereichsnamen der Ansammlung von Bereichsnamen zu verwenden, um auf den Serverbereich (30) zuzugreifen, wobei der Bereichsname die kodierten Zustandsinformationen enthält.

2. Verfahren nach Anspruch 1, bei dem der Serverbereich (30) durch eine Adresse, vorzugsweise eine Intemet-IP-Adresse, bezeichnet wird, wobei das Verfahren die weiteren Schritte aufweist:
- Bereitstellen des die kodierten Zustandsinformationen aufweisenden Bereichsnamens an einen Namensserver (32), vorzugsweise einen Internet-DNS-Namensserver,
- Erhalten der Adresse des Serverbereichs (30) von dem Namensserver (32), und
- Kontaktieren des Serverbereichs (30) bei der Adresse und Bereitstellen des die kodierten Zustandsinformationen enthaltenden Bereichsnamens an den Serverbereich (30), wobei der Bereichsname vorzugsweise in einem HTTP-Kopffeld an den Serverbereich (30) bereitgestellt wird.

3. Verfahren nach Anspruch 1 oder Anspruch 2, ferner mit den anfänglichen Schritten:
- Kontaktieren des Serverbereichs (30) unter Verwendung eines Bereichsnamens aus der Ansammlung von Bereichsnamen, wobei der Bereichsname keine gültigen kodierten Zustandsinformationen enthält,
- Erhalten eines Verweisungsbefehls an einen anderen Bereichsnamen der Ansammlung von Bereichsnamen, wobei der andere Bereichsname kodierte Zustandsinformationen, die von dem Serverbereich (30) bereitgestellt worden ist, enthält, und
- Verwenden des anderen Bereichsnamens zum Zugriff auf den Serverbereich (30).

4. Verfahren zum Bereitstellen von Zustandsinformationen in einem zustandslosen Datenübertragungsprotokoll, wobei die Zustandsinformationen zwischen einem Klient (20) und einem Serverbereich (30) bereitgestellt werden, wobei auf den Serverbereich (30) unter jedem Bereichsnamen einer Ansammlung von Bereichsnamen zugegriffen werden kann, wobei das Verfahren die Schritte aufweist:
- Erhalten eines Bereichsnamens der Ansammlung von Bereichsnamen, wobei der Bereichsname die kodierten Zustandsinformationen enthält, wobei der Bereichsname vorzugsweise in einem Internet-Host-Kopffeld erhalten wird, und
- Herausziehen der Zustandsinformationen aus dem Bereichsnamen.

5. Verfahren nach Anspruch 4, ferner mit dem Schritt, die herausgezogenen Zustandsinformationen zu verwenden, um dem Klient (20) Informationen bereitzustellen, die von den Zustandsinformationen abhängen, und vorzugsweise ferner mit den Schritten, die Zustandsinformationen zu verändern und in die dem Klient (20) bereitgestellten Informationen zumindest einen Bereichsnamen einzubetten, der die kodierten veränderten Zustandsinformationen enthält.

6. Verfahren nach einem der Ansprüche 1 bis 5, bei dem die Zustandsinformationen über eine Mehrzahl von Kommunikationsvorgängen zwischen dem Klient (20) und dem Serverbereich (30) hinweg bewahrt bleiben.

7. Verfahren nach einem der Ansprüche 1 bis 6, bei dem das zustandslose Datenübertragungsprotokoll ein Internet-Protokoll ist, insbesondere das HTTP-Protokoll.

8. Verfahren nach einem der Ansprüche 1 bis 7, bei dem die Zustandsinformationen ein Identifikator sind, der einem Benutzer oder einer laufenden Benutzersitzung zugeordnet ist.

9. Verfahren nach einem der Ansprüche 1 bis 8, bei dem das Datenübertragungsprotokoll ein hierarchisches Bereichsnamenssystem verwendet, und bei dem die Abschnitte aller Bereichsnamen der Ansammlung von Bereichsnamen, beginnend von der höchsten Hierarchieebene bis herunter zu einer vorbestimmten Hierarchieebene, entweder identisch sind oder in einer vorbestimmten Menge von Bereichsnamensabschnitten enthalten sind.

10. Verfahren nach einem der Ansprüche 1 bis 9, bei dem der Bereichsname ein Name eines Internet-Host ist, und/oder bei dem der Bereichsname eine Internet-IP-Nummer mit mehr als 32 Bit ist, und/oder bei dem die Bereichsnamen von Dateipfadangaben, die Dokumente innerhalb des Serverbereichs (30) bezeichnen, unterschiedlich sind.

11. Verfahren nach einem der Ansprüche 1 bis 10, bei dem mindestens ein weiterer Serverbereich (30) bereitgestellt wird, wobei auf den weiteren Serverbereich (30) unter jedem Bereichsnamen einer weiteren Ansammlung von Bereichsnamen zugegriffen werden kann, wobei das Verfahren den Schritt aufweist, einen Bereichsnamen der weiteren Ansammlung von Bereichsnamen zu verwenden, um auf den weiteren Serverbereich (30) zuzugreifen, wobei der Bereichsname die kodierten vorherigen Zustandsinformationen enthält.

12. Verfahren nach einem der Ansprüche 1 bis 11, bei dem die Zustandsinformationen Informationen zur Identifizierung des Benutzers und/oder kommerzielle Informationen, die den Benutzer betreffen, und/oder Informationen über die Gültigkeit der Zustandsinformationen enthalten.

13. Computerprogrammprodukt zur Ausführung durch einen Mehrzweckcomputer zum Bereitstellen von Zustandsinformationen in einem zustandslosen Datenübertragungsprotokoll, wobei das Computerprogrammprodukt Befehle aufweist, um den Mehrzweckcomputer dazu zu veranlassen, die Schritte des Verfahrens eines der Ansprüche 1 bis 12 auszuführen.

14. Vorrichtung mit mindestens einem Mehrzweckcomputer, der zum Ausführen der Schritte des Verfahrens eines der Ansprüche 1 bis 12 programmiert ist.

## Revendications

1. Procédé pour fournir des informations d'état dans un protocole de communication de données sans état, lesdites informations d'état étant fournies entre un client (20) et un site de serveur (30), ledit site de serveur (30) étant accessible à chacun d'un groupe de noms de site, ledit procédé comprenant l'étape qui consiste à utiliser l'un des noms de site dudit groupe de noms de site pour accéder audit site de serveur (30), ledit nom de site contenant les informations d'état codées.

2. Procédé selon la revendication 1, dans lequel ledit site de serveur (30) est identifié par une adresse, de préférence une adresse de protocole Internet (IP), ledit procédé comprenant les étapes supplémentaires qui consistent à :
- fournir à un serveur de noms (32), de préférence un serveur de noms de domaine (DNS) Internet, ledit nom de site contenant lesdites informations d'état codées,
- recevoir dudit serveur de noms (32) ladite adresse dudit site de serveur (30), et
- entrer en contact avec ledit site de serveur (30) à ladite adresse et fournir ledit nom de site contenant lesdites informations d'état codées audit site de serveur (30), ledit nom de site étant de préférence fourni audit site de serveur (30) dans une zone d'en-tête de protocole de transfert de documents hypertextuels (HTTP).

3. Procédé selon la revendication 1 ou la revendication 2, comprenant également les étapes initiales qui consistent à :
- entrer en contact avec ledit site de serveur (30) à l'aide d'un nom de site dudit groupe de noms de site, ledit nom de site ne contenant pas d'information d'état codée valide,
- recevoir une instruction de déroutage vers un autre nom de site dudit groupe de noms de site, ledit autre nom de site contenant une information d'état codée fournie par ledit site de serveur (30), et
- utiliser ledit autre nom de site pour accéder audit site de serveur (30).

4. Procédé pour fournir des informations d'état dans un protocole de communication de données sans état, lesdites informations d'état étant fournies entre un client (20) et un site de serveur (30), ledit site de serveur (30) étant accessible à chacun d'un groupe de noms de site, ledit procédé comprenant les étapes qui consistent à :
- recevoir l'un des noms de site dudit groupe de noms de site, ledit nom de site contenant les informations d'état codées et étant de préférence reçu dans une zone d'en-tête d'hôte Internet, et
- extraire lesdites informations d'état dudit nom de site.

5. Procédé selon la revendication 4, comprenant également l'étape qui consiste à utiliser lesdites informations d'état extraites pour fournir audit client (20) des informations en fonction desdites informations d'état, et de préférence aussi les étapes qui consistent à modifier lesdites informations d'état et à intégrer au moins un nom de site contenant les informations d'état modifiées codées dans lesdites informations fournies audit client (20).

6. Procédé selon l'une quelconque des revendications 1 à 5, dans lequel lesdites informations d'état sont conservées pendant toute la durée de plusieurs événements de communication entre ledit client (20) et ledit site de serveur (30).

7. Procédé selon l'une quelconque des revendications 1 à 6, dans lequel ledit protocole de communication de données sans état est un protocole Internet, en particulier le protocole HTTP.

8. Procédé selon l'une quelconque des revendications 1 à 7, dans lequel lesdites informations d'état sont un identifiant associé à un utilisateur ou à une session d'utilisateur en cours.

9. Procédé selon l'une quelconque des revendications 1 à 8, dans lequel ledit protocole de communication de données utilise un système de noms de site hiérarchique, et dans lequel les parties de tous les noms de site dudit groupe de noms de site à partir du niveau hiérarchique supérieur en descendant jusqu'à un niveau hiérarchique prédéterminé sont soit identiques soit contenues dans un ensemble prédéterminé de parties de noms de site.

10. Procédé selon l'une quelconque des revendications 1 à 9, dans lequel ledit nom de site est un nom d'hôte Internet, et/ou dans lequel ledit nom de site est un numéro IP Internet contenant plus de 32 bits, et/ou dans lequel lesdits noms de site sont distincts de spécifications de chemins de fichiers définissant des documents dans ledit site de serveur (30).

11. Procédé selon l'une quelconque des revendications 1 à 10, dans lequel il est prévu au moins un autre site de serveur (30), ledit autre site de serveur (30) étant accessible à chacun d'un autre groupe de noms de site, ledit procédé comprenant l'étape qui consiste à utiliser l'un des noms de site dudit autre groupe de noms de site pour accéder audit autre site de serveur (30), ledit nom de site contenant les informations d'état précédentes codées.

12. Procédé selon l'une quelconque des revendications 1 à 11, dans lequel lesdites informations d'état comprennent des informations servant à identifier l'utilisateur et/ou des informations commerciales relatives à l'utilisateur et/ou des informations concernant la validité desdites informations d'état.

13. Progiciel informatique destiné à être exécuté par un ordinateur universel pour fournir des informations d'état dans un protocole de communications de données sans état, ledit progiciel informatique contenant des instructions pour faire exécuter par ledit ordinateur universel les étapes du procédé selon l'une quelconque des revendications 1 à 12.

14. Appareil comprenant au moins un ordinateur universel programmé pour exécuter les étapes du procédé selon l'une quelconque des revendications 1 à 12.
